# EUROPEAN PATENT APPLICATION

(11) **EP 1 560 442 A1**
(43) Date of publication of application: **03.08.2005**
(21) Application number: 04002169.3
(22) Date of filing: 30.01.2004
(51) Int. Cl.: H04Q 3/00, H04M 3/42

(54) **A method and a server to establish a connection to external facility capabilities**

(71) Applicant: SIEMENS AKTIENGESELLSCHAFT, 80333 München (DE)
(72) Inventor: Ernst, Roland, 36414 Unterbreizbach (DE); Kastl, Petra, 34212 Melsungen Ot Adelshausen (DE); Müller, Thomas, 34302 Guxhagen (DE); Pforr, Edgar, 99834 Gerstungen (DE); Wiegand, Thomas, 34576 Homberg Efze (DE); Wölkner, Christian, 36404 Oechsen (DE)

(57) **Abstract**

The present invention relates to a method and a server suitable to establish a connection to external facility capabilities (IP) provided by a legacy entity (SSP) within a mobile communication network. The method comprises the following steps of:
- Receiving a facility request signal (2),
- initiating an internal service logic procedure (ISL) mapping the request signal to a signal (4) which is suitable to initiate establishing the connection (5) to the legacy entity providing the requested facility.

## Description

The present invention relates to a method and a server suitable to establish a connection to external facility capabilities provided by a legacy entity within a mobile communication network.

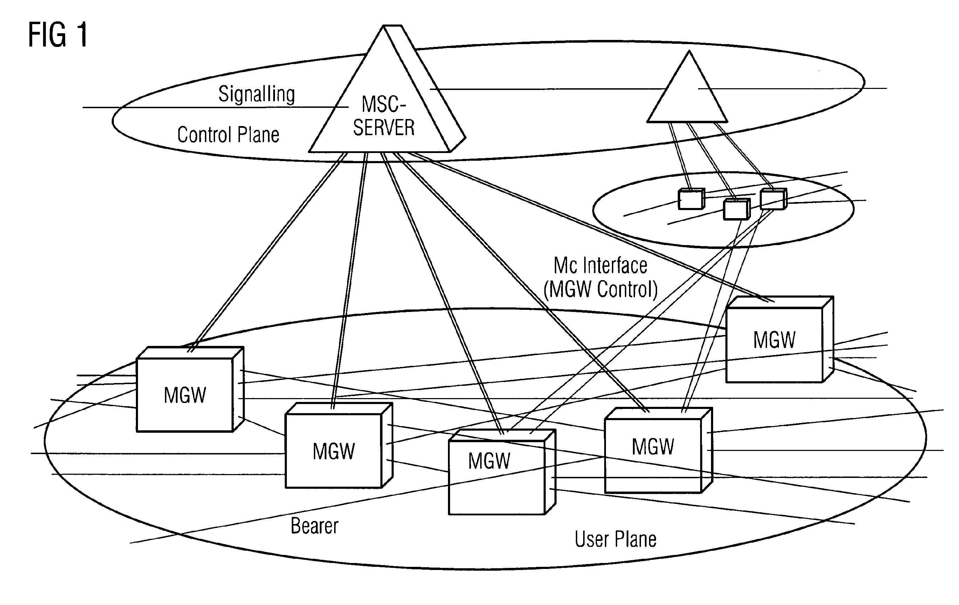

This invention is used in the telecommunications field. With the new architecture coming, as shown in figure 1, there will be a separation of bearer and control. The control will be performed by so called MSC Servers, which control several media gateways MGW. The bearer, i.e. the traffic is established on the MGW level. Also the equipment for playing (user interactive) announcements, the Intelligent Peripherie (IP) is supposed to be placed in the MGW.

But there will not be a "hard" cut within most of the existing networks. It will be more like an evolution.

For the purpose to implement the new architecture the following steps are imaginable.

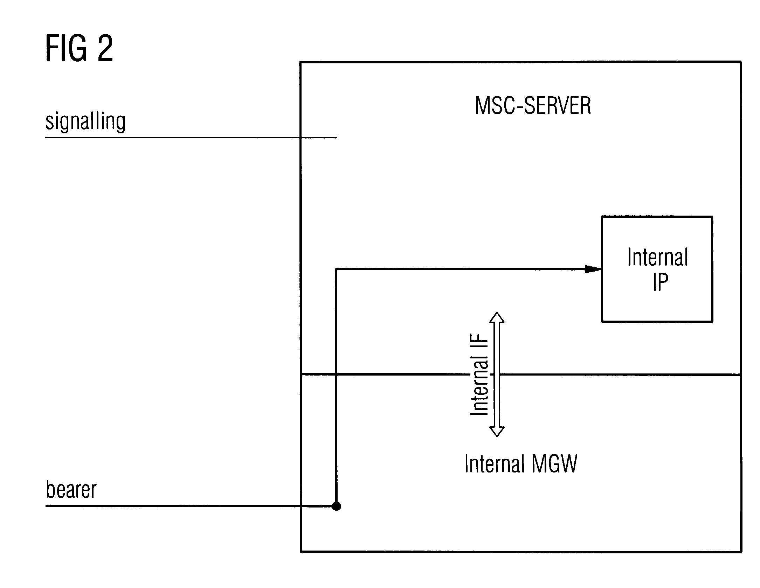

In a first step as shown in figure 2, it is foreseen, that the separation is not kept in all cases. If necessary, the MSC Server "drags up" the bearer from MGW. This is possible, because each MSC Server has an integrated MGW, and the MSC Server and its MGW communicate via an internal, not totally standard conform interface. So in this first evolution phase, the announcement equipment may stay in the MSC Server (internal IP) and can easily be addressed: the bearer is dragged up into the MSC Server and the playing of the announcement is initiated as done in the "old" architecture. The same is valid if CPH, MTPY and similar facilities are needed.

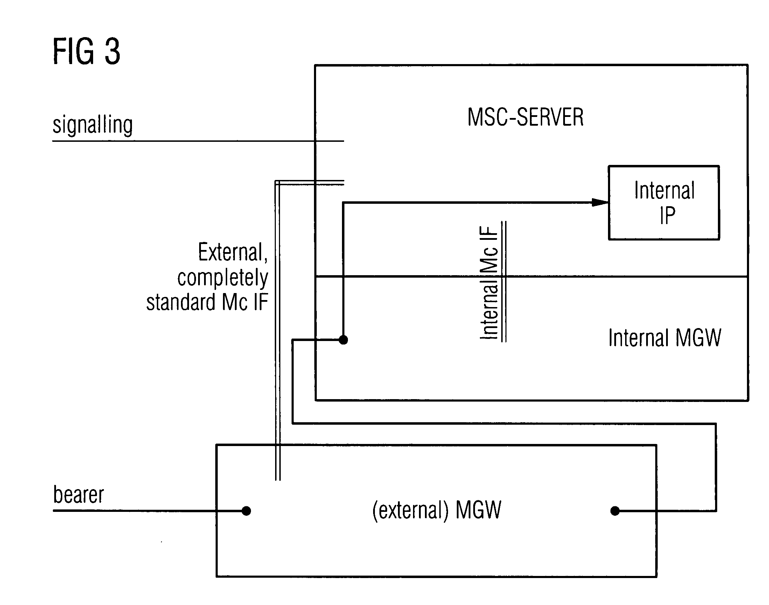

In a second step as shown in figure 3, each MSC Server will also have the software of a MGW integrated, in parallel the MSC Server will support "real" MGWs via a completely standardised external interface, the Mc interface. The used protocol is the H.248 protocol. However if necessary, the MSC Server can still drag the bearer up: it just advises the external MGW to connect the bearer with its internal MGW and then the bearer is dragged up to the MSC Server. So in such an environment the equipment for announcements and UI dialogues and the facilities for CPH and MPTY can still be kept within the MSC Server.

At the same time there will be MSC Servers, which do not even have the internal MGW (in order to save hardware costs at operator side). The bearer can no longer be dragged up and thus equipment for announcements within a MSC Server can no longer be used.

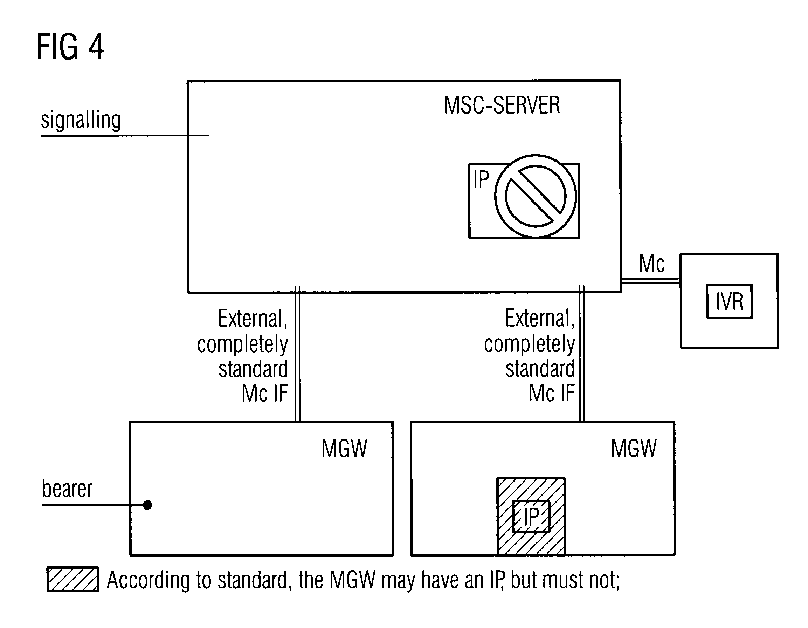

Networks will more and more be a mixture of all these entities. But in the future, most of the MSC Server entities will be pure MSC Servers, following the idea of having few MSC Servers, each controlling many MGWs. The facilities for playing announcements, user interactive dialogues, call party handling and multy party, and others shall be placed in the MGWs. But not necessarily all MGWs must be equipped with all these capabilities. There is even the possibility to have specialised entities serving just to provide such facilities
- in that case as shown in figure 4, they are called Interactive Voice Response (IVR). IVRs must be accessible for MSC Servers and are controlled via MC interface too.

Because of the assumption that
- MGWs/IVRs providing such special functions are quite expensive,
- the operators would like to use the already available equipment
- and operators and vendors are interested in saving migration efforts and avoid risks as well as
- a variety of MGWs and IVRs will be on the market coming from different vendors having different facilities
the presence of all possibly requested facilities in the MGW or IVR is not necessarily given. Facilities might be asked, which are supplied neither by the MGW nor by an IVR.

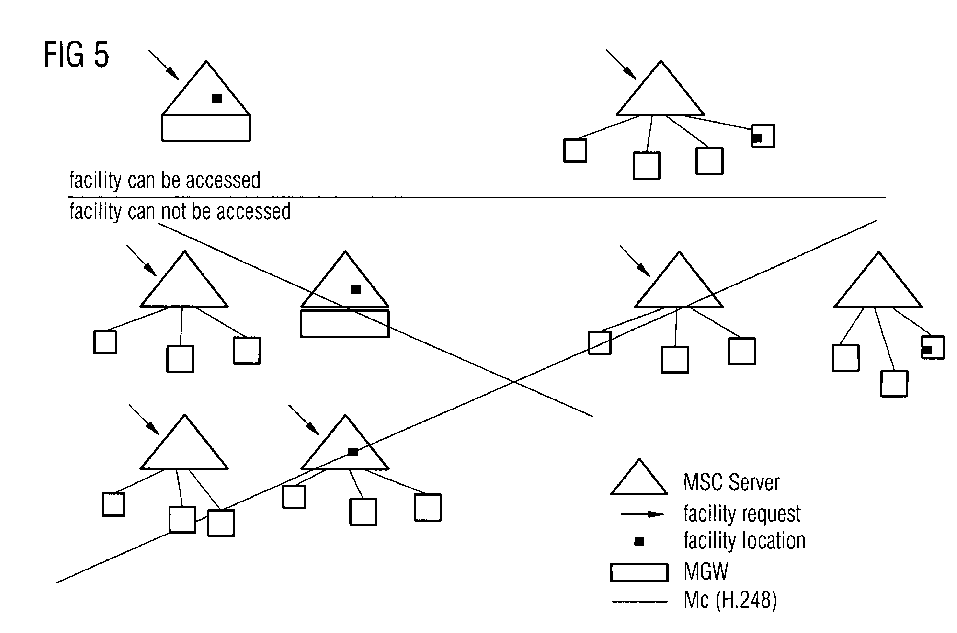

Up to now - as shown in figure 5 - a facility request sent as a signal to a certain MSC Server can be fullfilled if and only if
- an integrated MGW is present in the very server, which received the request (by dragging up the bearer)
   and the server has the facility (not standard conform) or
- there is at least one MGW / IVR under the MSC Servers control, which provides the facility.

First the two methods known up to now to access a facility are described. As example the SCP shall ask for a simple announcement.

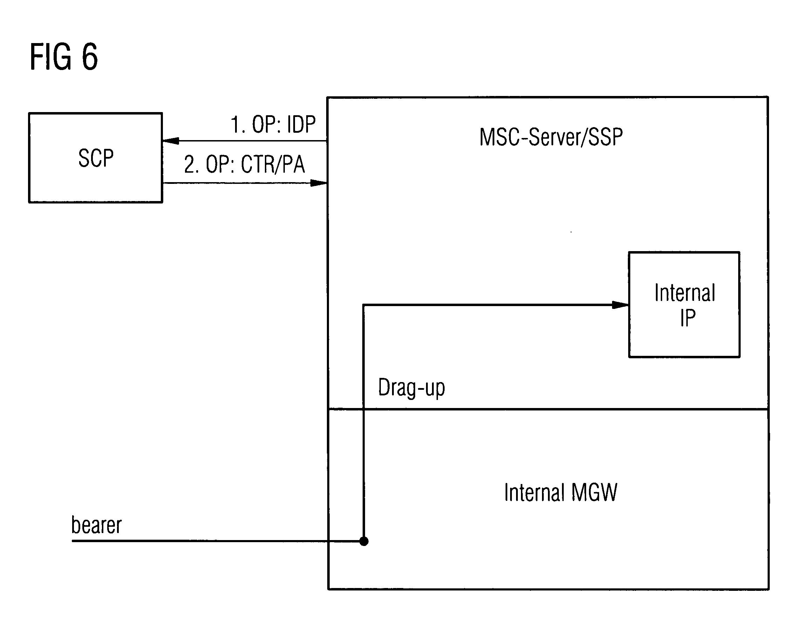

Handling as long as the IP is within the MSC Server and the MSC server has an integrated MGW (not conform with the new architecture) - as shown in figure 6:
With the operation InitalDetectionPoint 1 an Intelligent Network dialogue to the SCP is opened.
The SCP instructs the Service Switching Point SSP, which is its interface partner within the MSC Server, with the operation ConnectToRessource CTR followd by the operation PlayAnnouncement PA, to establish a connection 2 to an internal IP. The bearer is dragged up and the (internal) IP is addressed.

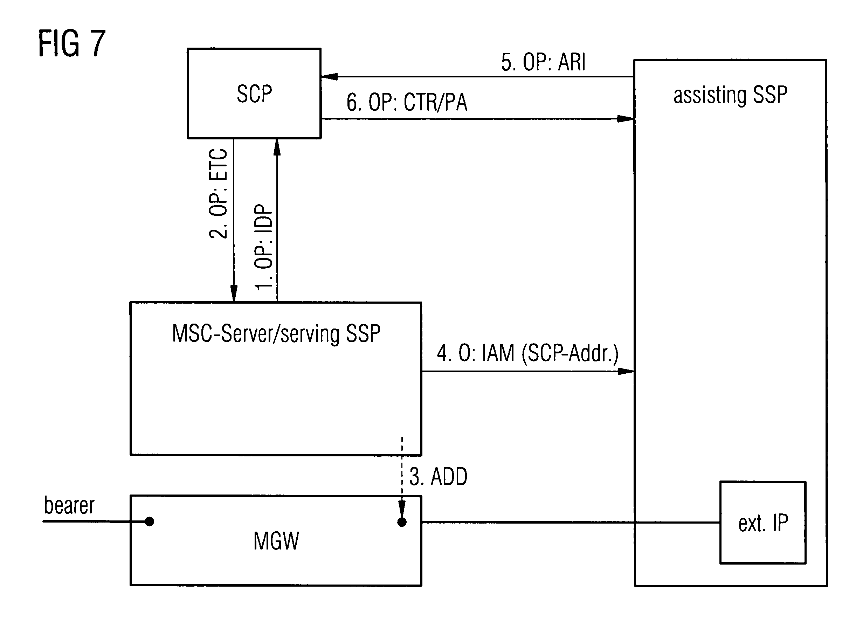

Present handling if there is no internal IP (note: the service in the SCP is informed about the IP capabilities):
As shown in figure 7, the SCP instructs the SSP using the operation 2 EstablishTemporaryConnection ETC, if the MSC Server has no internal IP. The MSC Server sends an ISUP message IAM with the SCPs address to the wanted MSC Server, which has got the needed facility. In parallel it instructs the MGW to build a connection.
The so called assisting SSP asks the SCP for the necessary information about the announcement to be played using the operation 4 AssistRequestInstruction (ARI), which is answered by the ConnectToResource and PlayAnnouncement instruction 5.

Both mechanisms are available as standardised methods. The protocol used between the SCP and the SSP is a standardised CAP or a venor specific INAP protocol (e.g. SINAP for SAG).

It is therefore an object of the present invention to develop a method and a server providing vendors improved alternatives.

This object is achieved by a method, a server and a database for establishing a connection to external facility capabilities provided by a legacy entity within a mobile communication network using the steps and the arrangements respectively which are mentioned in the independent claims. Further advantageous embodiments of the invention are described in the dependent claims.

It is an aspect of the invention to use a method or to provide means for the steps of:
- Receiving a facility request signal,
- initiating an internal service logic procedure mapping the request signal to a signal which is suitable to initiate establishing the connection to the legacy entity providing the requested facility.

The same facilities shall be available in the network during and after a migration as before the migration. The idea is, to integrate existing entities (e.g. MSC, SRF, ...) - so called legacy entities - providing all these facilities, which are not in the MGW or in the IVR. Of course these entities have actually no H.248 interface and can only be accessed via the existing interfaces (i.e. ISUP, INAP, CAP, MAP, ...) by the MSC Server. They terminate the bearer always via TDM lines, i.e. they do both, signalling and transport.
So from the MSC Server point of view the requested facility can be in a MGW, in an IVR and / or in a legacy entity described above.
If a facility is requested, the MSC Server shall check the configuration of the network. If the facility is only available in the legacy entity, the MSC Server shall provide a new service logic. This logic shall establish a TDM connection to the legacy entity. As soon as there is a connection, the logic in the MSC Server instructs the legacy entity via a suitable interface to access the facility.

In a next step the establishing of a connection to the legacy entity is described using the above example: the SCP requests a simple announcement.
The above described assist procedure is taken as a basis. The difference is that the service in the SCP does not send an operation ETC but an operation CTR, because the service used to send an operation CTR in the old architecture and was not modified with the migration.

In the following, the present invention will be described in greater detail on the basis of preferred embodiments with reference to the accompanying drawings, in which:
Figure 1 shows a principle diagram of the 3GPP Rel. 4/5 CS network architecture, wherein the user and the control plane are separated,
Figure 2 shows an evolution, wherein bearer and control path are separated and there is an internal Interface between MGW and MSC,
Figure 3 shows an evolution, wherein bearer and control path are separated and there is an external Interface between MGW and MSC,
Figure 4 shows an evolution, wherein bearer and control path are separated and there is an external Interface between MGW and MSC; facilities are possibly arranged in MGWs or IVRs,
Figure 5 shows a principle diagram of possible network configurations during migration to the 3GPP Rel. 4/5 CS architecture,
Figure 6 shows a principle diagram of establishing announcement to interenal IP by SCP,
Figure 7 shows a principle diagram of establishing announcement to external IP via assist procedure by SCP,

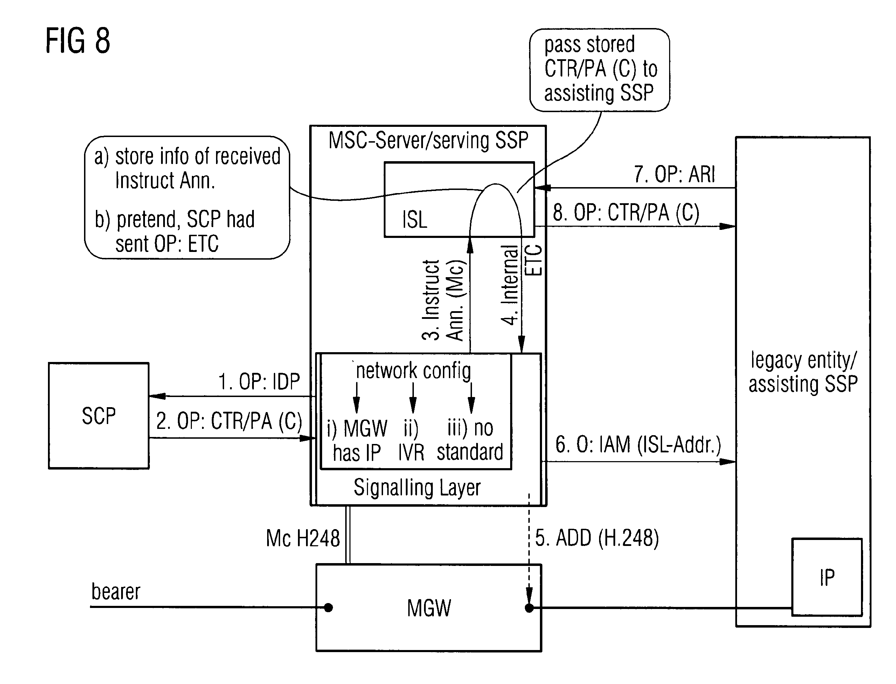

Figure 8 shows a principle diagram of establishing announcement to IP by SCP in a completely separated network using assist procedure,

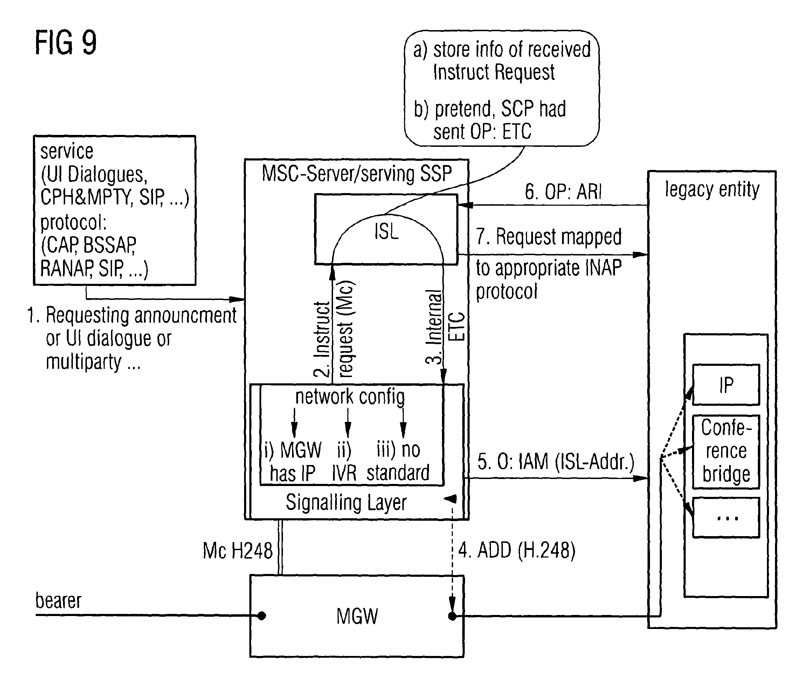

Figure 9 shows a principle diagram of establishing a connection to legacy facility in a completely separated network using assist procedure,

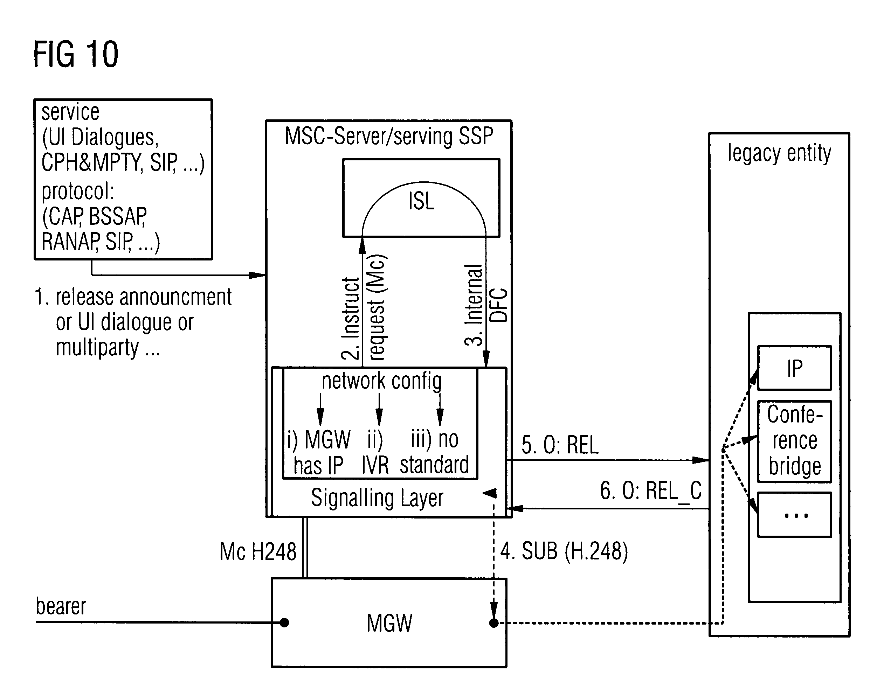

Figure 10 shows a principle diagram of releasing a connection to legacy entity in a completely separated network,

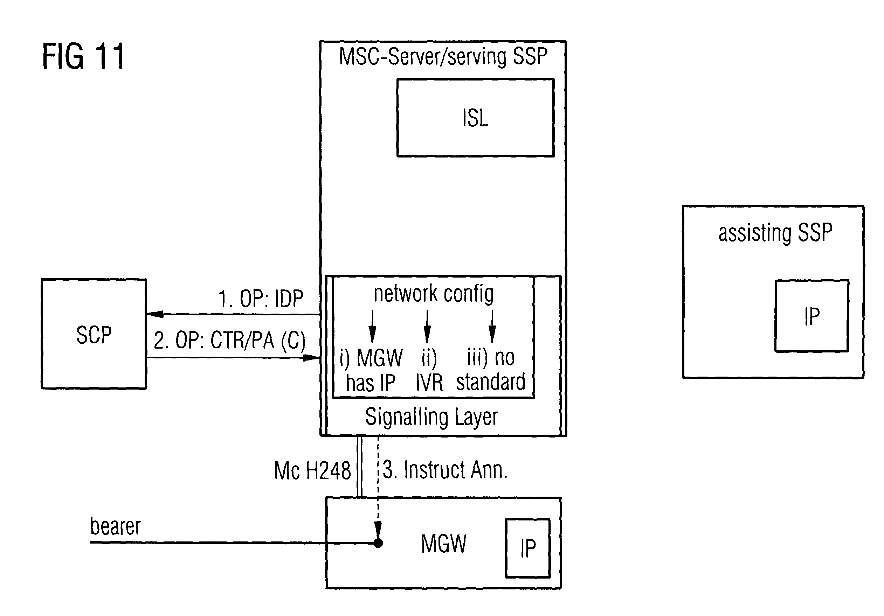

Figure 11 shows a principle diagram of establishing a connection to IP located in MGW,

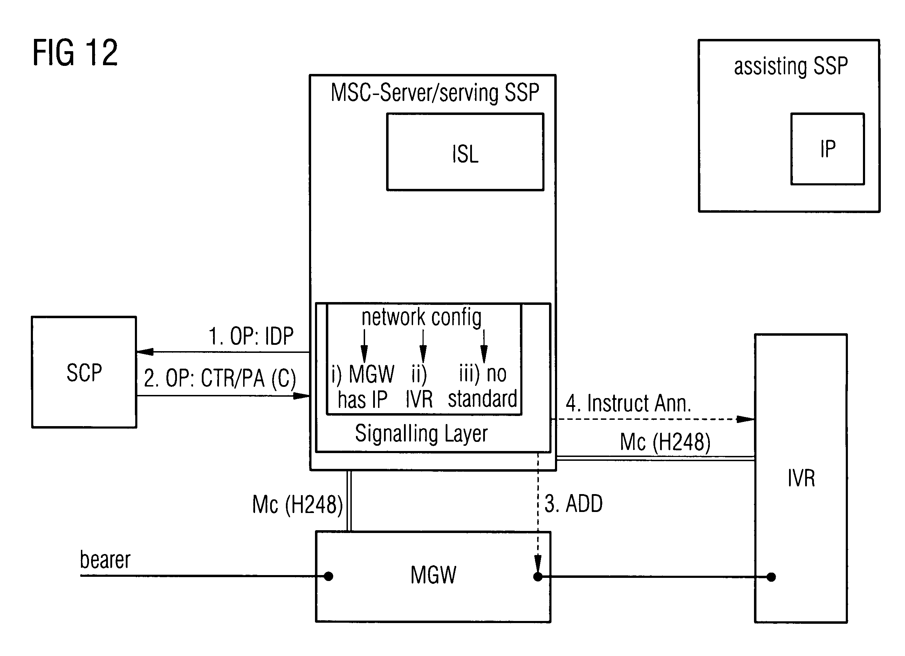

Figure 12 shows a principle diagram of establishing a connection to IP located in IVR,

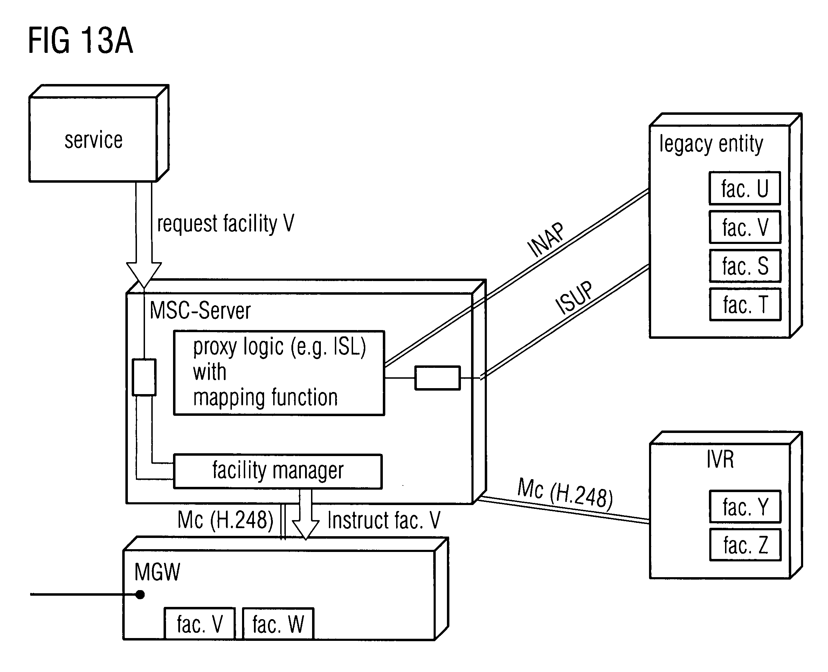

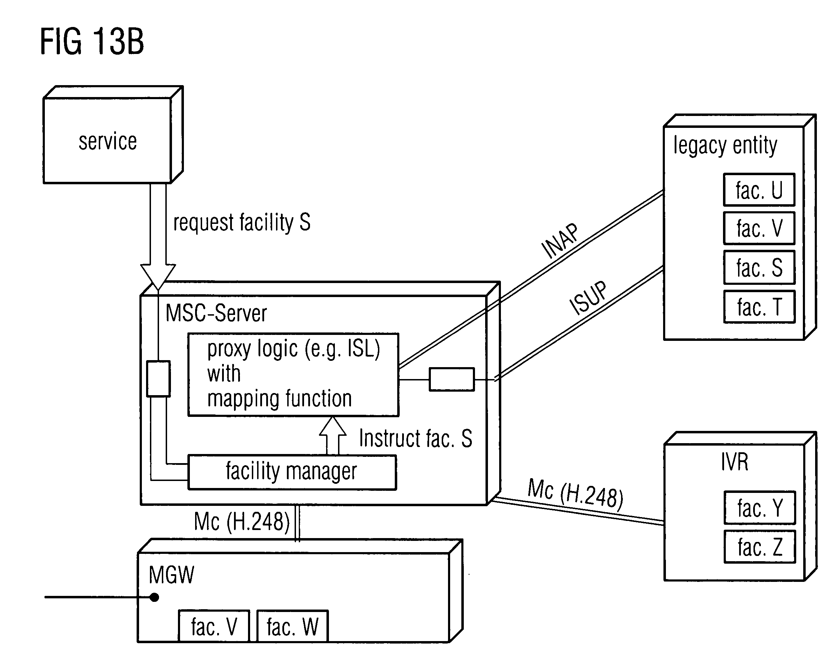

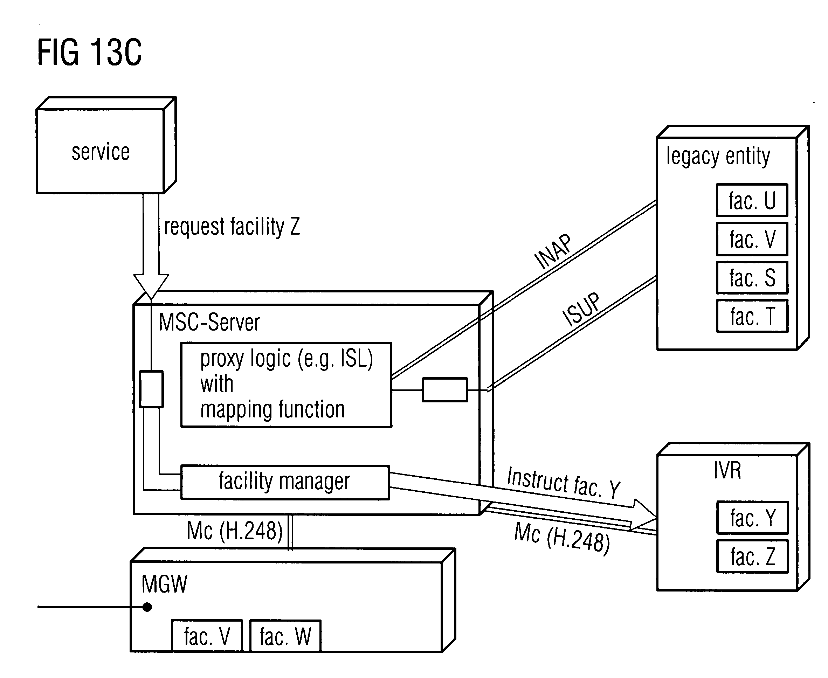

Figure 13A to 13C show the location of facilities in the network with legacy entity, IVR and 3GPP Rel. 4/5 CS architecture and access to the facilities.

If the network has at least one MSC Server with integrated MGW functionality (see figure 2 or figure 3) or any other legacy entity, which can handle the bearer and the signalling (ISUP and INAP) in parallel and which has got the facilities for playing an announcement, the assist procedure could be used to realise a kind of "re-routing". I.e. all traffic, which needs the establishment of an announcement using an IP is connected to this certain entity.

To avoid the necessity to modify any service in the SCP, the SCP shall continue to send CTR/PA 2 to the SSP, if it wants to initiate an announcement. The SSP shall now check the network configuration. If there is no standard configuration for the requested facility, the SSP shall redirect the request to play an announcement to some Integrated Service Logic ISL or any Service Logic 3, which has a CAP or INAP interface. The ISL stores the play announcement request a) and pretends the SCP had sent an ETC 4. Thus the MSC Server will think, it had received an operation ETC and instructs the MGW to add a connection 5. Via the ISUP interface the MSC Server signals the address of the ISL (instead of the SCPs address), i.e. the ISL takes over the part of SCP in the further handling 6.
The assisting SSP answers the IAM with an operation ARI 7. The (integrated) service logic sends now the stored operation PA 8 to the assisting SSP. The announcement can be played.
As soon as the announcement is finished, the connection to the assisting SSP is released.

### More generally the idea works like follows:

A certain service needs a facility like an announcement, an UI dialogue, CPH or a similar facility. This service can be placed e.g. in a SCP.
This server sends a request to the MSC Servervia a fitting interface like e.g. CAP1. The network configuration is checked. If the requested facility is available in a legacy entity only, the "assist procedure" is initiated. The internal service logic shall store the request and shall map it to the respective INAP operation later on.

If an UI dialogue is requested, and if any digits are collected, they are passed back via the ISL to the service, which initiated the UI dialogue!

If the reporting of certain events was requested, the report is passed via the ISL to the service.

If the facility is needed no longer, the connection is released:

If the check of the network configuration results, that the facility is in the MGW or that an IVR with the facility is available, the standard handling shall be performed:
Example with an IP as needed facility:

Finally an overview to the possible network configuration, the possible location of the facilities and their access is given:

If a network migrates to the new architecture, according to the standard it must have MGWs/IVRs, which support all needed facilities.

The idea to have a legacy entity too and to address it using already implemented interfaces helps the operator to migrate softly and to achieve a highly flexible configuration. Furthermore it gives the provider a good opportunity for stepwise evolution and for easy introduction of new services.

The invention is particularly placed in the facility manager (check of network configuration above) and the proxy logic (called integrated service logic above) with the mapping function.

The described "assist" method uses standardised interfaces (ISUP/BICC and INAP) and can be easily implemented and with small effort. What is called legacy entity can be e.g. an arbitrary Mobile Switching Centre MSC. I.e. the operator can re-use his existing IP facilities, he can migrate softly and still the concept of the new architecture is not winded up. The operator will have all facilities available during and after the migration independent of the capabilities of MGWs and IVRs.

The vendors can offer a flexible solution with full support of all facilities, which were supported before the introduction of the new architecture even if the MGW is developed in steps and even if the vendor has not yet an IVR with Mc interface in the portfolio. There is no need to buy an IVR from a foreign company just to be able to offer the same capabilities as done so far within the old architecture.

The Interface from the serving SSP to the internal logic is an internal Interface.
The MSC Server and the SCP can continue working hand in hand, providing flexible solutions for announcements, UI dialogues, CPH etc.

As soon as a facility is available in the MGW or in an IVR, the standardised procedures can be used, as all given facility locations can exist in parallel and can be access in parallel.

### Abbreviations

- 3GPP: 3^{rd} Generation Partnership Project
- BSSAP: Base Station System Application Part
- CAMEL: Customised Applications for Mobile network Enhanced Logic
- CAP: CAMEL application part
- CPH: Call Party Handling
- CS: Circuit Switched
- IF: Inter Face
- INAP: Intelligent Network Application Part
- IP: Intelligent Peripherie
- ISDN: Integrated Services Digital Networks
- ISL: Integrated Service Logic
- ISUP: ISDN User Part
- IVR: Interactive Voice Response
- LTG: Line Trunk Group
- MAP: Mobile Application Part
- Mc: Interface between MSC Server and MGW
- MGW: Media Gateway
- MPTY: Multy ParTY
- MSC: Mobile Switching Centre
- O:IAM: ISUP message "InitalAddressMessage"
- O:REL: ISUP message "Release"
- O:REL_C: ISUP message "Release Clear"
- OP:ARI: INAP/ CAP operation "AssistRequestInstruction"
- OP:CTR: INAP/ CAP operation "ConnectTo Ressource"
- OP:DFC: INAP/ CAP operation "DisconnectForwardConnection"
- OP:ETC: INAP/ CAP operation "EstablishTemporaryConnection"
- OP:IDP: INAP/ CAP operation "InitialDetectionPoint"
- OP:PA: INAP/ CAP operation "PlayAnnouncment"
- OP:PAC: INAP/ CAP operation "PromptAndCollectUserInformation"
- RANAP: Radio Access Network Application Part
- SINAP: Siemens INAP
- SIP: Session Initiation Protocol
- SCP: Service Control Point
- SRF: Specialised Resource Function
- SSP: Service Switching Point
- TDM: Time Division Modulation
- UI: User Interactive

## Claims

1. A method to establish a connection (5) to external facility capabilities (IP) provided by a legacy entity (SSP) within a mobile communication network, comprising the following steps of:
- Receiving a facility request signal (2),
- initiating an internal service logic procedure (ISL) mapping the request signal to a signal (4) which is suitable to initiate establishing the connection (5) to the legacy entity providing the requested facility.

2. A method according to claim 1, wherein
the internal service logic procedure (ISL) stores the content of the request signal (2) prior to mapping the request signal in said other signal (4).

3. A method according to claim 1 or 2, wherein
said mapped signal (4) initiates a further signal (6) for establishing said connection.

4. A method according to any one of the preceding claims, wherein the connection is temporary and releasable.

5. A method according to any one of the preceding claims, wherein said facility capability is represented by a intelligent peripherie (IP).

6. A method according to any one of the preceding claims, wherein said facility is represented by announcement, User interactive dialogue or Call Party Handling.

7. A method according to any one of the preceding claims, wherein the internal service logic procedure (ISL) has a CAP or INAP interface.

8. A method according to any one of the preceding claims, wherein the request signal (2) is represented by OP:CTR/PA(C)-Signal.

9. A method according to any one of the preceding claims, wherein said mapped signal (4) is represented by Internal ETC-Signal.

10. A method according to any one of the preceding claims, wherein said further signal (6) for establishing said connection is represented by O:IAM-Signal comprising the address of said internal service logic procedure.

11. A server (MSC, SSP) suitable to provide the method according to any one of the preceding claims, comprising means for the internal service logic procedure (ISL) which are suitable to map said request signal to said signal (4) which is suitable to initiate establishing said connection.

12. A database located in the server according to claim 11 comprising means containing network configuration information and means to initiate the use of the internal service logic procedure depending on said information.

13. A server according to claim 11 or 12, wherein the server is represented by a MSC server.

14. A server according to claim 11, wherein the server is represented by a SSP server.
